# EUROPEAN PATENT APPLICATION

(11) **EP 2 555 045 A1**
(43) Date of publication of application: **06.02.2013**
(21) Application number: 12162625.3
(22) Date of filing: 30.03.2012
(51) Int. Cl.: G02F 1/1335, G02B 5/30

(54) **Display panel and display apparatus employing the same**

(30) Priority: 03.08.2011 KR 20110077478
(71) Applicant: Samsung Electronics Co., Ltd., Suwon-si, Gyeonggi-do, 443-742 (KR)
(72) Inventor: Chung, Seong-eun, Seoul (KR); Jung, Il-yong, Gyeonggi-do (KR)
(74) Representative: Hewett, Jonathan Michael Richard

(57) **Abstract**

A display panel including a liquid crystal layer and a display apparatus employing the same are disclosed. The display panel includes: first and second substrates; a liquid crystal layer which is interposed between the first and second substrates; first and second electrodes which are interposed respectively between the first substrate and liquid crystal layer and between the liquid crystal layer and the second substrate to apply power to the liquid crystal layer; first and second wire grid polarizing plates which are formed in a surface of each of the first and second substrates; and at least one of the first and second wire grid polarizing plates comprising a film-type wire grid polarizing plate comprising a base film and a wire grid formed on the base film and allowing predetermined polarized light to be transmitted therethrough.

## Description

The present invention relates to a display panel including a liquid crystal layer and a display apparatus employing the same, and more particularly, to a display panel and a display apparatus employing the same which employs a wire grid polarizing plate.

Generally, a liquid crystal panel which is employed in a liquid crystal display apparatus, as one type of flat panel display apparatus, is of a type that does not emit light itself, and thus includes a backlight unit that is provided in a rear surface of the liquid crystal panel which emits surface light.

Light emitted by a light source of the backlight unit passes through optical elements such as a light guide plate, a diffusion plate and a prism sheet forming the backlight unit and is incident to the liquid crystal panel with a considerable part of the light lost.

The liquid crystal panel is driven and controlled by on the basis of pixels, and each pixel selectively receives incident light to thereby realize an image. To do the foregoing, the liquid crystal panel includes first and second substrates, a liquid crystal layer interposed between the first and second substrates and a polarizing plate which allows predetermined polarized light out of incident light to be selectively transmitted therethrough. As the polarizing plate allows predetermined polarized light to be transmitted therethrough and absorbs the remaining polarized light, and approximately 50% of incident light is thereby absorbed.

Brightness deteriorates in a display apparatus which includes the foregoing backlight unit as a great amount of light from the light source is lost after passing through the optical elements of the backlight unit and the liquid crystal panel.

To compensate for the light lost by the polarizing plate, a conventional liquid crystal panel employs a dual brightness enhancement film (DBEF) including a multi-layer polymer thin film instead of an absorbent polarizing plate. In this case, part of the light reflected by the DBEF may be reused to compensate for the light loss to some extent. However, the DBEF with the multi-layer polymer incurs high manufacturing costs and requires a complicated manufacturing process.

As another measure to compensate for the light loss by the absorbent polarizing plate, a liquid crystal panel employing a wire grid polarizing plate has been disclosed. The disclosed liquid crystal panel has a glass substrate and a wire grid polarizing plate formed integrally thereon, and thus provides a lower degree of freedom in a manufacturing process. That is, if a defect is found in a TFT liquid crystal panel during a manufacturing process, the expensive glass substrate should be also be scrapped.

Accordingly, one or more exemplary embodiments of the present invention provide a display panel and a display apparatus comprising the same which minimizes light loss, reduces manufacturing costs and provides a simplified manufacturing process.

Another exemplary embodiment is to provide a display panel and a display apparatus employing the same which does not require scrapping a glass substrate even if a defect is found in a wire grid polarizing plate during a manufacturing process.

The foregoing and/or other aspects may be achieved by providing a display panel including: first and second substrates; a liquid crystal layer which is interposed between the first and second substrates; first and second electrodes which are interposed respectively between the first substrate and liquid crystal layer and between the liquid crystal layer and the second substrate to apply power to the liquid crystal layer; first and second wire grid polarizing plates which are formed in a surface of each of the first and second substrates; and at least one of the first and second wire grid polarizing plates comprising a film-type wire grid polarizing plate comprising a base film and a wire grid formed on the base film and allowing predetermined polarized light to be transmitted therethrough.

The first wire grid polarizing plate may include a first base film and a first wire grid which is formed on a surface of the first base film facing the first substrate.

The second wire grid polarizing plate may include a second base film and a second wire grid which is formed on a surface of the second base film facing the second substrate.

The display panel may further include a phase difference compensation film which is interposed between the first and second wire grid polarizing plates and compensates for a phase difference of incident light.

The phase difference compensation film may be interposed in at least one of between the first wire grid polarizing plate and the first substrate, and between the second substrate and the second wire grid polarizing plate.

The display panel may further include a color filter which is interposed between the first substrate and the liquid crystal layer or between the liquid crystal layer and the second substrate, and allows predetermined light out of incident light to be transmitted therethrough and to realize a color image.

Another aspect may be achieved by providing a display apparatus including: one of the foregoing described display panel; and a backlight unit which emits light to the display panel.

The display apparatus may further include a color filter which is interposed between the first substrate and the liquid crystal layer, or between the liquid crystal layer and the second substrate and allows predetermined light out of incident light to be transmitted therethrough and realizes a color image.

The above and/or other aspects will become apparent and more readily appreciated from the following description of the exemplary embodiments, taken in conjunction with the accompanying drawings, in which:
FIG. 1 is a sectional view of a display panel according to a first exemplary embodiment;
FIG. 2 is a perspective view of a first wire grid polarizing plate of the display panel according to the first exemplary embodiment;
FIG. 3 is a sectional view of a display panel according to a second exemplary embodiment;
FIG. 4 is a sectional view of a display panel according to a third exemplary embodiment;
FIG. 5 is a sectional view of a display panel according to a fourth exemplary embodiment; and
FIG. 6 is an exploded perspective view of a display apparatus according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

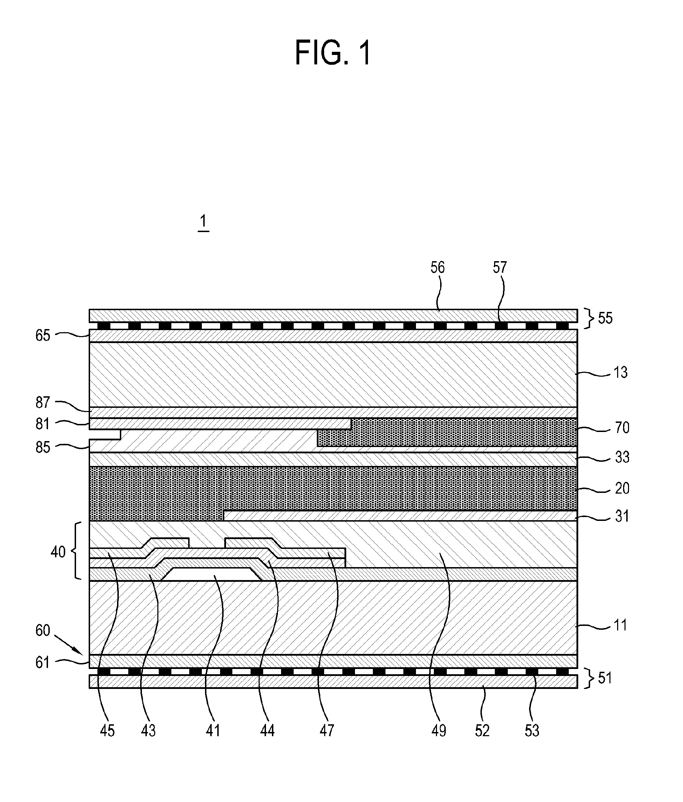

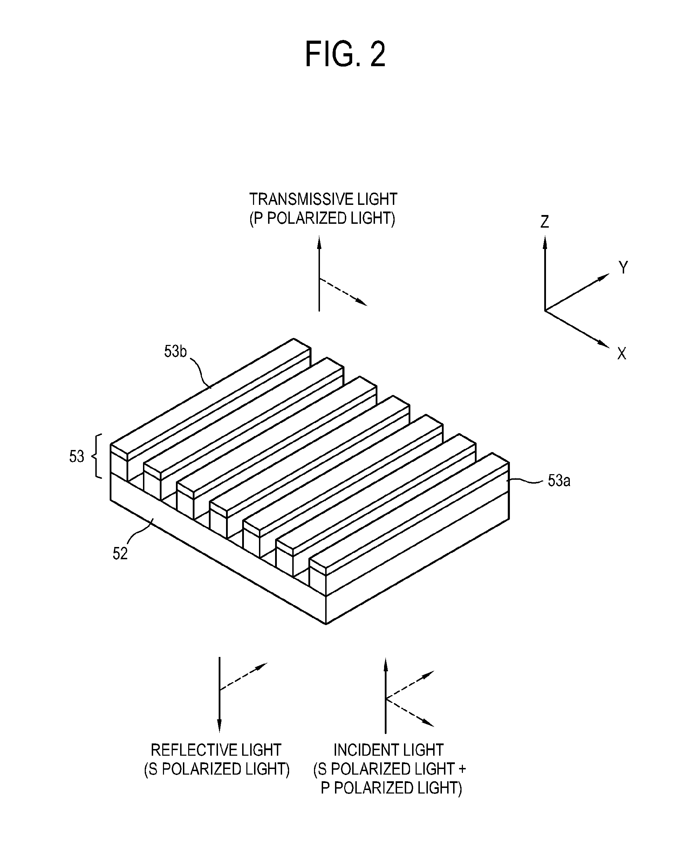

FIG. 1 is a sectional view of a display panel according to an exemplary embodiment. FIG. 2 is a perspective view of a first substrate and a first wire grid polarizing plate in FIG. 1.

Referring to the drawings, a display panel 1 according to the exemplary embodiment includes first and second substrates 11 and 13 which are disposed to face each other; a liquid crystal layer 20 which is interposed between the first and second substrates 11 and 13; first and second electrodes 31 and 33; a pixel layer 40; and first and second wire grid polarizing plates 51 and 55. At least one of the first and second wire grid polarizing plates 51 and 55 includes a film-type wire grid polarizing plate including a base film 52 or 56; and a wire grid 53 or 57 formed on the base film 52 or 56 and allowing predetermined polarized light to be transmitted therethrough.

The display panel 1 according to the exemplary embodiment may further include a phase difference compensation film 60 and a colour filter 70 which realizes a colour image.

The display panel 1 according to the present exemplary embodiment may be employed in an image device such as a TV or a monitor, a mobile terminal or a display apparatus for exhibition and advertisement. For example, the mobile terminal may include a mobile phone, a portable multimedia player (PMP), a netbook, a laptop and an electronic book terminal.

The first and second substrates 11 and 13 include a transparent material through which light is transmitted from a backlight unit (not shown).

The liquid crystal layer 20 includes pixels which are individually controlled in arrangement by a voltage applied to the first and second electrodes 31 and 33 to realize an image. The liquid crystal layer 20 may include a liquid crystal mode such as a vertical alignment (VA) mode, a patterned vertical alignment (PVA) mode, a twisted nematic (TN) mode, and an in-plane switching (IPS) mode. The liquid crystal layer 20 may divide or pattern sub pixels or adjust a refractive index of liquid crystals uniformly to improve a viewing angle of light.

The pixel layer 40 includes a thin film transistor (TFT), and controls the first and second electrodes 31 and 33 to thereby control a liquid crystal arrangement of the liquid crystal layer 20 by pixel. Each pixel includes a plurality of sub pixels.

The sub pixel according to the present exemplary embodiment means the smallest unit of a pixel to which an image gray scale corresponding to red, green and blue colours is input. A plurality of sub pixels which represent a single image signal is defined by a pixel.

The pixel layer 40 includes a gate electrode 41, a gate insulating layer 43, a drain electrode 45, a source electrode 47 and a passivation film 49 which form the TFT.

The gate electrode 41 may include a single or multi layered metal. A gate wire (not shown) and a gate pad (not shown) are formed on the same layer as the gate electrode 41. The gate wire is connected to the gate electrode 41 and is arranged in a transverse direction of the display panel 1. The gate pad is connected to a gate driver (not shown) and transmits a driving signal to the gate wire. A maintenance electrode (not shown) may be further formed on the same layer as the gate electrode 41 to accumulate electric charge. The gate insulating layer 43 may include silicon nitride (SiₓN_{y}) and cover the gate electrode 41 and the maintenance electrode.

A semiconductor layer 44 includes a semiconductor such as amorphous silicon and is formed on the gate insulating layer 43. An ohmic contact layer (not shown) which includes n+ hydrogenated amorphous silicon highly doped with silicide or an n-type dopant may be formed on the semiconductor layer 44. In this case, the ohmic contact layer is removed from a channel between the drain electrode 45 and the source electrode 47. A data wire (not shown) which includes a single or multi-layered metal is formed on the gate insulating layer 43. The source electrode 47 is separated from the drain electrode 45.

A passivation film 49 is formed on the drain electrode 45, the source electrode 47, and the semiconductor layer 44, which is not covered by the drain electrode 45 and the source electrode 47.

The first electrode 41 is a pixel electrode formed between the first substrate 11 and the liquid crystal layer 20, i.e., on the passivation film 49. The first electrode 41 includes a transparent conductive material such as indium tin oxide (ITO) or indium zinc oxide (IZO). The first electrode 41 is electrically connected to the source electrode 47.

A black matrix 81 and a second electrode 33 are formed on the second substrate 13. The black matrix 81 divides sub pixels, and prevents external light from being introduced to the TFT. The black matrix 81 may typically include a photosensitive organic material added with a black pigment such as carbon black or titanium oxide.

The second electrode 33 is interposed between the second substrate 13 and the liquid crystal layer 20, and includes a common electrode forming a voltage corresponding to the first electrode 31. Like the first electrode 31, the second electrode 33 includes a transparent conductive material such as ITO or IZO. The second electrode 33 directly applies a voltage to the liquid crystal layer 20 together with the first electrode 31.

An overcoat layer 85 is formed on the second electrode 33. The overcoat layer 85 makes the black matrix 81 and the color filter 70 flat and protects the black matrix 81. The overcoat layer 85 may include acrylic epoxy. The display panel 1 may further include a passivation film 87 which is interposed between the second substrate 13 and the black matrix 81 and protects the black matrix 81 and the color filter 70.

The first wire grid polarizing plate 51 faces the first substrate 11, and allows predetermined polarized light to be transmitted therethrough and reflects other polarized light again. The first wire grid polarizing plate 51 may include a film-type wire grid polarizing plate.

That is, the first wire grid polarizing plate 51 includes a first base film 52, and a first wire grid 53 which is formed in a surface of the first base film 52 facing the first substrate 11. The first base film 52 is used as a base to form the first wire grid 53. The first base film 52 may include poly ethylene terephthalate (PET) film or a triacetyl cellulose (TAC) film.

Referring to FIG. 2, the first wire grid polarizing plate 51 is shaped like a bar in which the first wire grid 53 is arranged in a certain direction with respect to the first base film 52. The first wire grid polarizing plate 51 may include a metal layer 53a and a hard mask 53b.

In manufacturing the first wire grid polarizing plate 51 having the foregoing configuration, the first wire grid polarizing plate 51 includes the first base film 52 which is separately provided from the first substrate 11 unlike a general wire grid polarizing plate forming a wire grid on a glass substrate. That is, the manufacturing process of the first wire grid polarizing plate 51 includes a process of depositing the metal layer 53a on the first base film 52, a process of forming the hard mask 53b in a predetermined pattern on the metal layer 53a, and a process of patterning the metal layer 53a by nano imprint lithography (NIL). The metal layer 53a may include a metal such as aluminium (A1), silver (Ag) copper (Cu), or a high strength alloy such as molybdenum-tungsten (MoW). The metal layer 53a may include conductive polymer. The hard mask 53b protects the metal layer 53a and improves polarizing performance of the metal layer 53a. The hard mask 53b may include a dielectric substance such as SiO₂. The first wire grid polarizing plate 51 is regularly arranged by a unit grid with predetermined height (H) and width (W). A cycle of the unit grid forming the first wire grid polarizing plate 51, i.e., a pitch, depends on the colour of light to be emitted. That is, if the pitch of the unit grid is adjusted into 1/2 or less of a wavelength of incident light, a diffracted wave is not formed, and only transmissive light and reflective light exist. The first wire grid polarizing plate 51 allows light having a certain polarizing component to be transmitted therethrough, and includes a pitch to allow light in all wavelengths to be transmitted therethrough. In particular, the pitch may be smaller than 1/2 of a wavelength of blue light. The first wire grid polarizing plate 51 according to the present exemplary embodiment is 150 nm in height and 100 to 150 nm in pitch. The ratio of height to width of the first wire grid polarizing plate 51 may be approximately 1:3 or more.

If the first wire grid polarizing plate 51 has the foregoing configuration, S polarized light in parallel with the grid is reflected and P polarized light vertical to the grid out of light received by the first wire grid polarizing plate 51 is transmitted. That is, out of light as non-polarized light received by the backlight unit, the P polarized light is transmitted through the first wire grid polarizing plate 51 to the liquid crystal layer 20 whereas the S polarized light is reflected to the backlight unit and reused.

The second wire grid polarizing plate 55 may be formed in a surface of the second substrate 13, allows predetermined polarized light to be transmitted therethrough and reflects other polarized light again. The second wire grid polarizing plate 55 may include a film- type wire grid polarizing plate. That is, the second wire grid polarizing plate 55 includes the second base film 56 and a second wire grid 57 formed in a surface of the second base film 56 facing the second substrate 13. The second wire grid polarizing plate 55 may be formed in a surface of the second substrate 13, and allow predetermined polarized light to be transmitted therethrough to thereby realize an image according to an arrangement direction of liquid crystals controlled by sub pixels of the liquid crystal layer 20.

The second wire grid polarizing plate 55 is manufactured in a substantially same method as that of the first wire grid polarizing plate 51, and a grid arrangement direction thereof is vertical or same direction as that of the first wire grid polarizing plate 51. The configuration and manufacturing process of the second wire grid polarizing plate 55 is substantially the same as those of the first wire grid polarizing plate 51 described by referring to FIGS. 1 and 2, and detailed description thereof will be omitted.

As described above, as at least one of the first and second wire grid polarizing plates 51 and 55 includes a film-type wire grid polarizing plate, it may be separately manufactured with respect to the substrate during a manufacturing process. Therefore, even if a defect is found from a wire grid polarizing plate during a manufacturing process, the substrate does not need to be scrapped, thereby minimizing loss in the manufacturing process.

The display panel according to the exemplary embodiment includes the liquid crystal layer 20 that is optically anisotropic. Therefore, if the linearly polarized light which is transmitted through the first wire grid polarizing plate 51 passes through liquid crystal cells of the liquid crystal layer 20 vertically or diagonally, a retardation value varies and causes a phase difference. Then, properties of transmissive light according to a viewing angle vary and a viewing angle becomes narrow. The phase difference compensation film 60 is employed to solve the problem of a narrowed viewing angle that may arise when the polarized light is converted by the wire grid polarizing plate in a liquid crystal mode such as VA mode or TN mode. That is, the phase difference compensation film 60 is a phase difference plate which has the same, but negative value with respect to the retardation value of the liquid crystal, and compensates for the retardation value of the liquid crystal and improves the viewing angle.

The phase difference compensation film 60 may be provided in at least one area between the first and second wire grid polarizing plates 51 and 55. That is, the phase difference compensation film 60 may be interposed at least one of between the first wire grid polarizing plate 51 and the liquid crystal layer 20, and between the liquid crystal layer 20 and the second wire grid polarizing plate 55.

The phase difference compensation film 60 may include a triacetyl cellulose (TAC) film in a predetermined thickness.

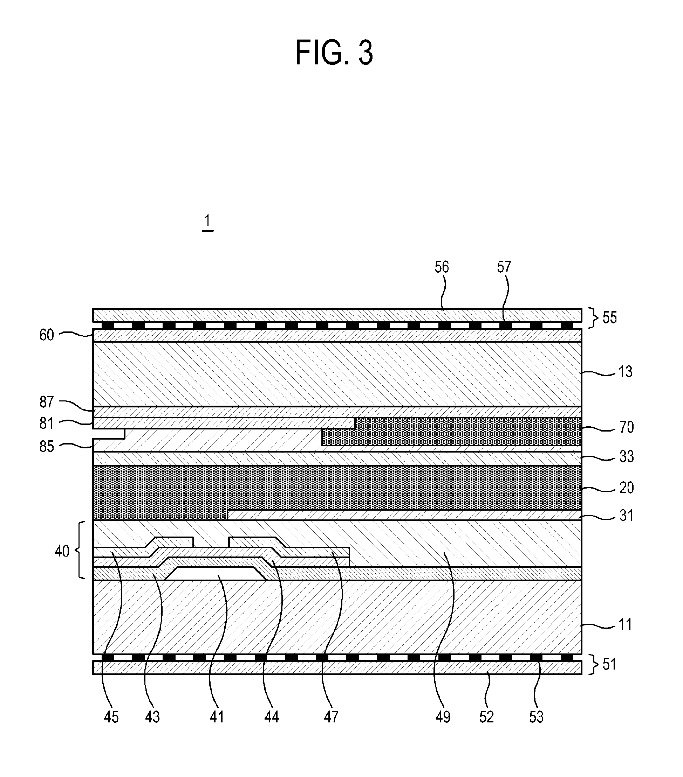

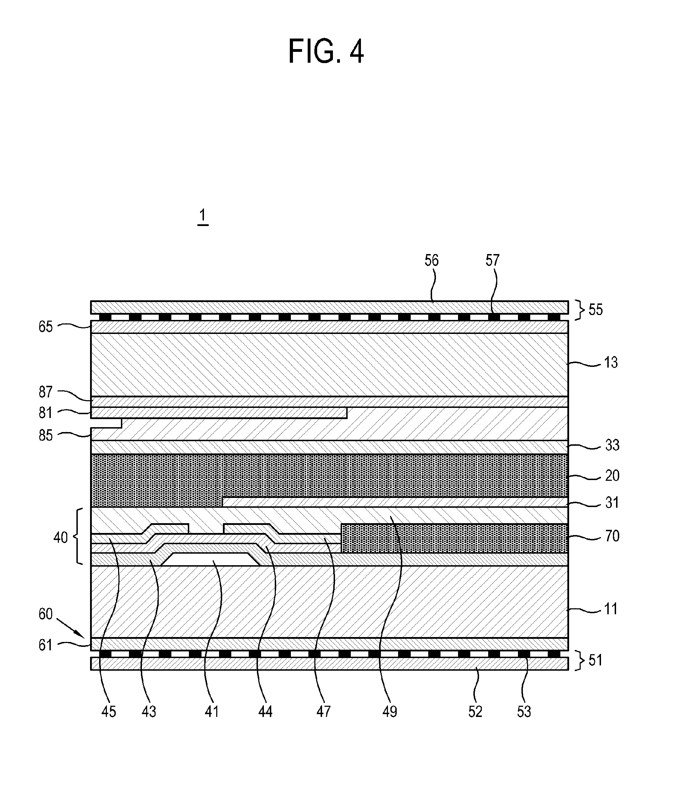

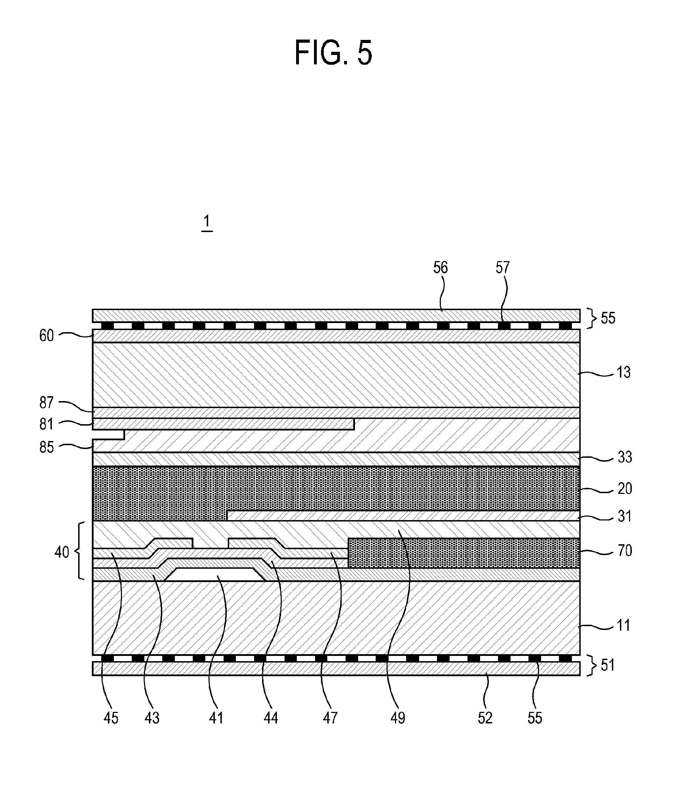

As shown in FIGS. 1 and 4, the phase difference compensation film 60 may include two sheets of V-TAC films 61 and 65 in a thickness of wavelength λ/2. As shown in FIGS. 3 and 5, the phase difference compensation film 60 may include one sheet of V-TAC film in a thickness corresponding to a predetermined reference wavelength λ of incident light. In this case, the phase difference compensation film 60 may be interposed between the second substrate 13 and the second wire grid polarizing plate 55.

As the phase difference compensation film 60 compensates for the phase difference as described above, the narrowed viewing angle which arises from the display panel including the wire grid polarizing plate may be prevented.

The colour filter 70 allows light in a predetermined wavelength to be transmitted therethrough to thereby realize a colour image. As shown in FIGS. 1 and 3, the colour filter 70 may be interposed between the liquid crystal layer 20 and the second substrate 13. If light is emitted from a lower part of the first substrate 11, light having a certain polarizing light component and being transmitted through the first wire grid polarizing plate 51 is transmitted through the liquid crystal layer 20 and the colour filter 70 and is emitted by light in a predetermined colour. As shown in FIGS. 4 and 5, the colour filter 70 may be provided in the pixel layer 40, in which case the light in a predetermined colour determined through the transmission of the colour filter 70 is transmitted through the liquid crystal layer 20 to thereby realize an image.

According to the present exemplary embodiment, the light is transmitted from the first substrate 11 to the liquid crystal layer 20, but is not limited thereto. Alternatively, the light may be transmitted from the second substrate 13 to the liquid crystal layer 20.

The display panel 1 according to the exemplary embodiment may further include a reflection restricting layer (not shown) which is arranged in an external surface of one of the first substrate 11 and the second substrate 13, i.e., an external surface of the substrate from which light is emitted substantially. The reflection restricting layer reduces reflection of external light from the surface of the display panel 1 and prevents damage to definition due to the external light. The reflection restricting layer may include an anti-reflection film or anti-glare film or a moth-eye pattern layer formed by a nano technology in an external surface of the substrate.

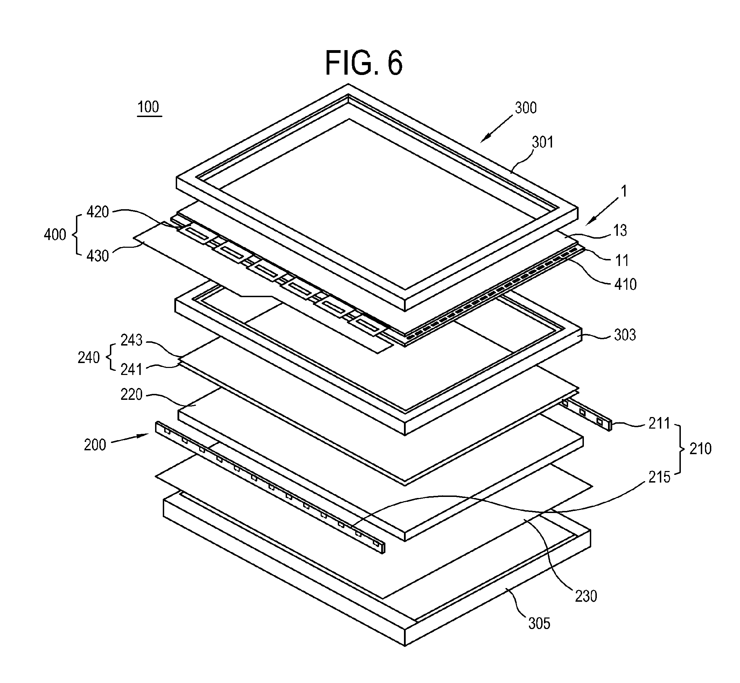

The display panel 1 may further include a panel driver 400 shown in FIG. 6.

FIG. 6 is a perspective view of the display apparatus according to the exemplary embodiment.

Referring to FIG. 6, the display apparatus 100 includes a display panel 1, a backlight unit 200 and a housing 300 which accommodates the foregoing elements, and an image provider (not shown).

The display panel 1 includes a first substrate 11, a second substrate 13 facing the first substrate 11, a liquid crystal layer (not shown) interposed between the first and second substrates 11 and 13, and a panel driver 400 driving a pixel layer (not shown) to display an image signal. The display panel 1 receives light from the outside and controls the quantity of light transmitted through the liquid crystal layer interposed between the first and second substrates 11 and 13 to thereby display an image. The display panel is substantially the same as the display panel according to the exemplary embodiment described by referring to FIGS. 1 to 5, and thus detailed description of elements other than the panel driver 400 will be omitted.

The panel driver 400 may include a gate driving integrated circuit (IC) 410, a data chip film package 420 and a printed circuit board (PCB) 430. The gate driving IC 410 may be formed on the first substrate 11 and connected to each gate line (not shown) formed in the first substrate 11. The data chip film package 420 may be connected to each data line formed in the first substrate 11. The data chip film package 420 may include a wire pattern in which a semiconductor chip is formed in a base film, and a tape automated bonding (TAB) tape connected by TAB technology. For example, the data chip film package may include a tape carrier package (the "TCP") or a chip on film (the "COF").

Various parts may be mounted in the PCB 430 to input a gate driving signal to the gate driving IC 410 and input a data driving signal to the data chip film package 420.

The backlight unit 200 may be classified into a direct type and an edge type depending on an optical arrangement of a light source and application/non-application of a light guide plate. FIG. 6 illustrates the edge type backlight unit 200. In this case, the backlight unit 200 may include a light source 210, a light guide plate 220 to guide light emitted by the light source 210, a reflection sheet 230 provided below the light guide plate 220 and at least one optical sheet 240. The light source 210 is provided in at last one edge of the light guide plate 220. The light source 210 may include a light emitting diode (LED) array, a cold cathode fluorescent lamp (CCFL) or a hot cathode fluorescent lamp (HCFL). FIG. 6 illustrates first and second LED arrays 211 and 215 which are provided at opposite edges of the light guide plate 220. The first and second LED arrays 211 and 215 may be electrically connected to an inverter (not shown) to receive power therefrom.

The light guide plate 220 converts a progress path of light emitted by the light source 210, and guides light to be transmitted to the display panel 1 as plane light. The light guide plate 220 may include a panel including a transparent material such as acryl or plastic. Various patterns may be formed in a rear surface of the light guide plate 220 to change the progress direction of the light incident to the light guide plate 220 to the display panel 1.

The reflection sheet 230 is installed in a lower surface of the light guide plate 220 and reflects light from a lower side to an upper side of the light guide plate 220. More specifically, the reflection sheet 230 reflects light that has not been reflected by fine dot patterns formed in the rear surface of the light guide plate 220 back to an emission surface of the light guide plate 220 to thereby reduce loss of light incident to the display panel 1 and to improve uniformity of light transmitted to the emission surface of the light guide plate 220.

At least one optical sheet 240 is installed in an emission surface of the light guide plate 220 and diffuses and focuses light emitted by the light guide plate 220. The optical sheet 240 may include a diffusion sheet 241, a prism sheet 243 and a protection sheet (not shown). The diffusion sheet 241 may be interposed between the light guide plate 220 and the prism sheet 243, scatter light transmitted by the light guide plate 220 and prevent light from being partially focused. The prism sheet 243 may have prisms in a predetermined shape in a certain arrangement to focus light diffused by the diffusion sheet 241 in a vertical direction of the display panel 1. The protection sheet may be formed on the prism sheet 243 and protect a surface of the prism sheet 243 and diffuse light to distribute light uniformly. According to the present exemplary embodiment, the backlight unit includes an edge type, but not limited thereto. Alternatively, the backlight unit may include a direct type.

The housing 300 may include a bezel 301, a main body 303, and a rear cover 305. The rear cover 305 accommodates therein the backlight unit 200 and the display panel 1. The rear cover 305 may include a metal material to ensure strength to external shock and the connection to the ground.

The image provider (not shown) is connected to the display panel 1 and provides the display panel 1 with an image signal.

As described above, a display panel and a display apparatus employing the same according to the exemplary embodiment employs a wire grid polarizing plate to thereby minimize light loss, reduce manufacturing costs, and provide a simplified manufacturing process. The display panel and the display apparatus employing the same employs a film-type wire grid polarizing plate and separately manufactures the wire grid polarizing plate with respect to a substrate and does not need to scrap the substrate even if a defect is found from the wire grid polarizing plate during a manufacturing process.

Further, the display panel and the display apparatus employing the same according to the exemplary embodiment includes a phase difference compensation film that is interposed between first and second wire grid polarizing plates and compensates for a phase difference to thereby improve a viewing angle.

Although a few exemplary embodiments have been shown and described, it will be appreciated by those skilled in the art that changes may be made in these exemplary embodiments without departing from the invention, the scope range of which is defined in the appended claims.

## Claims

1. A display panel comprising:
first and second substrates;
a liquid crystal layer which is interposed between the first and second substrates;
first and second electrodes which are interposed respectively between the first substrate and liquid crystal layer and between the liquid crystal layer and the second substrate to apply power to the liquid crystal layer;
first and second wire grid polarizing plates which are formed on a surface of each of the first and second substrates; and
at least one of the first and second wire grid polarizing plates comprising a film-type wire grid polarizing plate comprising a base film and a wire grid formed on the base film and allowing predetermined polarized light to be transmitted therethrough.

2. The display panel according to claim 1, wherein the first wire grid polarizing plate comprises a first base film and a first wire grid which is formed on a surface of the first base film facing the first substrate.

3. The display panel according to claim 1 or claim 2, wherein the second wire grid polarizing plate comprises a second base film and a second wire grid which is formed on a surface of the second base film facing the second substrate.

4. The display panel as claimed in any one of claims 1 through 3, further comprising a phase difference compensation film which is interposed between the first and second wire grid polarizing plates and compensates for a phase difference of incident light.

5. The display panel according to claim 4, wherein the phase difference compensation film is interposed in at least one of between the first wire grid polarizing plate and the first substrate, and between the second substrate and the second wire grid polarizing plate.

6. The display panel as claimed in any one of claims 1 through 5, further comprising a colour filter which is interposed between the first substrate and the liquid crystal layer or between the liquid crystal layer and the second substrate, and allows predetermined light out of incident light to be transmitted therethrough to realize a colour image.

7. A display apparatus comprising:
a display panel as claimed in any one of claims 1 through 6; and
a backlight unit which emits light to the display panel.

8. A method for manufacturing a display panel comprising:
forming first and second substrates;
providing a liquid crystal layer between the first and second substrates; and
forming a first and a second wire grid polarizing plate on a respective surface of each of the first and second substrates,
wherein at least one of the first and second wire grid polarizing plates comprises a film-type wire grid polarizing plate.

9. The method for manufacturing a display panel according to claim 8, wherein the film-type wire grid polarizing plate comprises a base film and a wire grid formed on the base film.

10. The method for manufacturing a display panel according to claim 9, wherein at least one of the first and second wire grid polarizing plates is shaped like a bar.

11. The method for manufacturing a display panel according to claim 10, wherein at least one of the first and second wire grid polarizing plates includes a metal layer and a hard mask.

12. The method for manufacturing a display panel as claimed in any one of claims 8 through 11, further comprising:
providing a phase difference compensation film in at least one area between the first and second wire grid polarizing plates.
